# EUROPEAN PATENT SPECIFICATION

(11) **EP 3 163 917 B1**
(45) Date of publication and mention of the grant of the patent: **05.09.2018**
(21) Application number: 15810890.2
(22) Date of filing: 12.02.2015
(51) Int. Cl.: H04W 4/14, H04L 12/58

(54) **SENDING SHORT MESSAGES OVER USSD**
SENDEN VON KURZNACHRICHTEN ÜBER USSD
ENVOI DE COURTS MESSAGES SUR USSD

(30) Priority: 25.06.2014 CN 201410291436
(43) Date of publication of application: 03.05.2017
(73) Proprietor: ZTE Corporation, Shenzhen, Guangdong 518057 (CN)
(72) Inventor: WEI, Xuesong, Shenzhen Guangdong 518057 (CN)
(74) Representative: Savi, Massimiliano
(86) International application number: PCT/CN2015/072925
(87) International publication number: WO 2015/196818

(56) References cited:
- EP-A1- 2 487 942
- WO-A2-2010/073263
- CN-A- 101 702 793
- CN-A- 101 883 340
- US-A1- 2002 193 127
- US-A1- 2008 132 259

## Description

### Technical Field

The present invention relates to the field of communications, and more particularly to a method and device for sending a short message.

### Background of the Related Art

The intelligent network is an architectural structure to generate and provide services, characterized in quickly and conveniently providing various menus and message services flexibly and economically. As an important value-added service flow, the Unstructured Supplementary Service Data (USSD) application service is quickly developed and applied. Especially due to the characteristics of the convenience and quickness of USSD, more and more operators provide various USSD application services.

For point-to-point message sending, the short message seems to be a major way of ordinary point-to-point message sending. But in some cases, using USSD to implement the point-to-point message sending may have some advantages. However, a method for using USSD to implement the point-to-point message sending has not been presented yet.

For the problem in the related art that the point-to-point message sending cannot be implemented by using USSD, no effective solution has been presented yet.

The document US 2008/132259 A1 discloses a method for providing access to instant messaging services are described in this application, implemented on a system, of receiving a request to access an instant messaging service from a mobile device through a first network protocol, the instant messaging service to be accessed via an Internet protocol.

The document WO 2010/073263 A2 discloses an instant messaging (IM) method and system using Unstructured Supplementary Service Data (USSD) as an enabler. The subscriber makes a USSD call which is routed through the mobile network operator of the user to a particular USSD Service-code which is then directed towards IM over USSD platform using any of standard protocols like SMPP/ HTTP/DB etc. IM over USSD Platform provides initial menu to the user giving various options to login / register / chat etc.

The document EP 2487942 A1 discloses a point-to-point chat system and method. The system comprises a USSD signaling interface unit and a chat control unit. The USSD signaling interface unit is configured to receive a USSD chat request message of an inviting party and a USSD chat joining message of an invited party via a core network, and to forward the USSD chat request message and the USSD chat joining message to the chat control unit.

### Content of the Invention

A method and device according independent claims are provided. Further improvements and embodiments are provided in the dependent claims.

Also provided is a method for sending a short message, which includes that: a preset Unstructured Supplementary Service Data (USSD) instruction input by a first user is received and a first USSD session for interacting with the first user is established, herein the preset USSD instruction is set to instruct the sending of a short message; a destination number and short message content that are input by the first user are received through the first USSD session, and the destination number is authenticated; and if the authentication is successful, a second USSD session for interacting with a second user that corresponds to the destination number is established, and the short message content is forwarded to the second user through the second USSD session.

The step that the destination number is authenticated includes that: the destination number is sent to an Online Charging System (OCS) for authentication, herein the OCS is set to judge whether the destination number belongs to a user of the present network; if yes, it is determined that the authentication of the destination number is successful; and/or, if not, the short message content is sent to the destination number through a short message.

After the short message content is forwarded to the second user through the second USSD session, the method further includes that: short message content input by the second user is received through the second USSD session, and the short message content is forwarded to the first user through the first USSD session; and/or, short message content input by the first user is received through the first USSD session, and the short message content is forwarded to the second user through the second USSD session.

After the short message content is forwarded to the second user through the second USSD session, the method further includes that: it is judged whether the second user hangs up the second USSD session or a response times out; and if yes, a first end message is sent to the first user through the first USSD session, herein the first end message is set to notify that the sending of the short message content is successful, and a response of the opposite side user times out.

After the short message content is forwarded to the second user through the second USSD session, the method further includes that: it is judged whether forwarding the short message content to the second user through the second USSD session is failed; and if yes, the short message content is sent to the destination number through a short message, and a second end message is sent to the first user through the first USSD session, herein the second end message is set to notify that the sending of the short message content is failed, and the short message content has been sent through a short message.

After the short message content is forwarded to the second user through the second USSD session, the method further includes that: it is judged whether the first user hangs up the first USSD session or a response times out, and the second user responds to the first user; and if yes, content of the response is sent to the first user through a short message, and the second end message is sent to the second user through the second USSD session, herein the second end message is set to notify that the sending of the short message content is failed, and the short message content has been sent through a short message.

After the short message content is forwarded to the second user through the second USSD session, the method further includes that: it is judged whether the first user hangs up the first USSD session or a response times out, and the second user does not respond to the first user; and if yes, the first USSD session and the second USSD session are hung up.

Also provided is a device for sending a short message, which includes: a receiving module, which is arranged to receive a preset Unstructured Supplementary Service Data (USSD) instruction input by a first user and establish a first USSD session for interacting with the first user, herein the preset USSD instruction is set to instruct the sending of a short message; an authenticating module, which is arranged to receive, through the first USSD session, a destination number and short message content that are input by the first user, and authenticate the destination number; and a forwarding module, which is arranged to, when the authentication is successful, establish a second USSD session for interacting with a second user that corresponds to the destination number, and forward the short message content to the second user through the second USSD session.

The authenticating module includes: an authenticating unit, which is arranged to send the destination number to an Online Charging System OCS for authentication, herein the OCS is set to judge whether the destination number belongs to a user of the present network, and if yes, determine that the authentication of the destination number is successful, and/or, if not, send the short message content to the destination number through a short message.

The device further includes: a response module, which is arranged to receive, through the second USSD session, short message content input by the second user, and forward the short message content to the first user through the first USSD session, and/or, receive, through the first USSD session, short message content input by the first user, and forward the short message content to the second user through the second USSD session.

By receiving the preset USSD instruction input by the first user and establishing the first USSD session for interacting with the first user, herein the preset USSD instruction is set to instruct the sending of a short message, receiving, through the first USSD session, the destination number and the short message content that are input by the first user, and authenticating the destination number, and if the authentication is successful, establishing the second USSD session for interacting with the second user that corresponds to the destination number, and forwarding the short message content to the second user through the second USSD session, embodiments of the present invention solve the problem in the related art that the point-to-point message sending cannot be implemented by using USSD, save the international roaming fees of users, provide users with more choices for sending messages, facilitate application and promotion of USSD value-added services, and achieve highly real-time sending and strong privacy.

### Brief Description of Drawings

The accompanying drawings described herein are used for providing a deeper understanding of the present invention, and constitute a part of the present application. Exemplary embodiments of the present invention and description thereof are used for illustrating the present invention and do not form an improper limit to the present invention. In the accompanying drawings:
FIG. 1 is a flowchart of a method for sending a short message according to an embodiment of the present invention;
FIG. 2 is a structural diagram of a device for sending a short message according to an embodiment of the present invention; and
FIG. 3 is a signaling flowchart of normal point-to-point USSD message sending according to a first embodiment of the present invention.

### Specific Embodiments

The present invention is elaborated below with reference to the accompanying drawings and in conjunction with embodiments. Note that, embodiments and features in the embodiments of the present application can be combined with each other under the condition of no conflicts.

Considering that using USSD to implement point-to-point message sending has many advantages, for example, the message content sent is more private, there is no message record left in the other party, and real-time requirement is higher, it is implemented in the present embodiment, by mainly utilizing the characteristics of the USSD that message sending is highly real-time and no information is kept. In another application scenario, more and more people travel abroad, and opportunities of travelling abroad are growing, but in the case of international roaming, making a call and sending a short message both have high international roaming fees. If it is possible to implement the point-to-point message sending by using USSD, the international roaming fees can be reduced, and thus the user charges can be reduced. In this case, if a solution of implementing the point-to-point message sending by using USSD can be provided, it is beneficial for the user to save charges, and more service choices are provided for the user to send messages, and it is also beneficial for operators to promote the USSD value-added services.

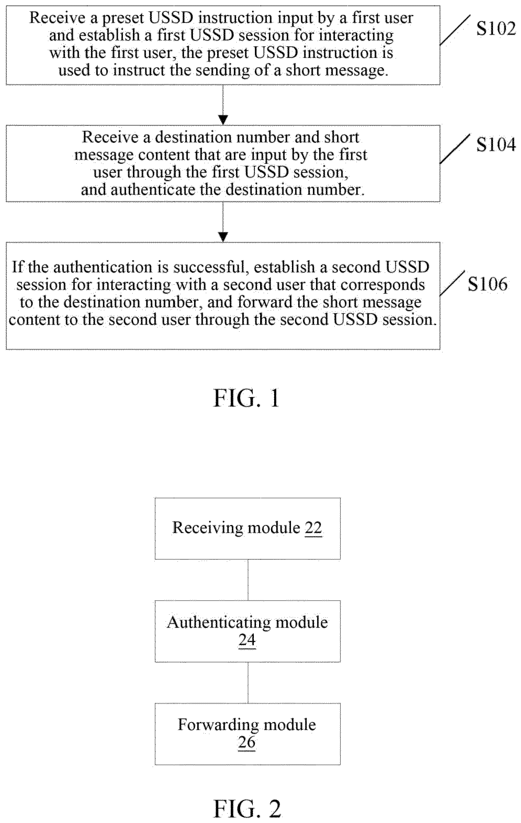

Based on these considerations, a method for sending a short message is provided in the embodiment. FIG. 1 is a flowchart of a method for sending a short message according to an embodiment of the present invention. As shown in FIG. 1, the method includes the following steps:
Step S102: a preset USSD instruction input by a first user is received and a first USSD session for interacting with the first user is established, herein the preset USSD instruction is set to instruct the sending of a short message;
Step S104: a destination number and short message content that are input by the first user are received through the first USSD session, and the destination number is authenticated; and
Step S106: if the authentication is successful, a second USSD session for interacting with a second user that corresponds to the destination number is established, and the short message content is forwarded to the second user through the second USSD session.

By means of the above steps, when the authentication of the second user is successful, the embodiment implements, through the first USSD session for interacting with the first user and the second USSD session for interacting with the second user, the point-to-point short message sending by using USSD, solves the problem in the related art that the point-to-point message sending cannot be implemented by using USSD, saves international roaming fees of users, provides users with more choices for sending messages, facilitates application and promotion of USSD value-added services, and achieves highly real-time sending and strong privacy.

In an exemplary embodiment, a specific way of authenticating the destination number can be that: the destination number is sent to an Online Charging System (OCS) for authentication, herein the OCS is set to judge whether the destination number belongs to a user of the present network; if yes, it is determined that the authentication of the destination number is successful; and/or, if not, the short message content is sent to the destination number through a short message.

In an exemplary embodiment, after the short message content is forwarded to the second user through the second USSD session, a short message response between the first user and the second user can be implemented by responding with a message in the established channel, so there is no need to reestablish a channel to send a short message. Specifically, short message content input by the second user is received through the second USSD session, and the short message content is forwarded to the first user through the first USSD session; and/or, short message content input by the first user is received through the first USSD session, and the short message content is forwarded to the second user through the second USSD session. In this way, the short message content is sent from A to the USSD center, and then is sent to B; B responds content to the USSD center, and then the content is sent to A, so that a complete interaction process is formed, and the point-to-point message sending of two-way interaction is implemented.

In an exemplary embodiment, after the short message content is forwarded to the second user through the second USSD session, if a user hangs up, and a response times out, or the sending is failed, then the system may process according to the following rules.

Rule 1: it is judged whether the second user hangs up the second USSD session or a response times out; if yes, a first end message is sent to the first user through the first USSD session, herein the first end message is set to notify that the sending of the short message content is successful, and a response of the opposite side user times out.

Rule 2: it is judged whether forwarding the short message content to the second user through the second USSD session is failed; and if yes, the short message content is sent to the destination number through a short message, and a second end message is sent to the first user through the first USSD session, herein the second end message is set to notify that the sending of the short message content is failed, and the short message content has been sent through a short message.

Rule 3: it is judged whether the first user hangs up the first USSD session or a response times out, and the second user responds to the first user; and if yes, content of the response is sent to the first user through a short message, and the second end message is sent to the second user through the second USSD session, herein the second end message is set to notify that the sending of the short message content is failed, and the short message content has been sent through a short message.

Rule 4: it is judged whether the first user hangs up the first USSD session or a response times out, and the second user does not respond to the first user; and if yes, the first USSD session and the second USSD session are hung up.

Corresponding to the above method, a device for sending a short message is further provided in the embodiment, which is arranged to implement the above embodiments and exemplary implementations. What has been described above will not be repeated. As will be used below, the term "module" can be implemented as a combination of software and/or hardware with an intended function. Although the device described in the following embodiment is realized through software in an exemplary embodiment, the realization through hardware or a combination of software and hardware can possibly be conceived.

FIG. 2 is a structural diagram of a device for sending a short message according to an embodiment of the present invention. As shown in FIG. 2, the device includes a receiving module 22, an authenticating module 24 and a forwarding module 26, which are elaborated below.

The receiving module 22 is arranged to receive the preset USSD instruction input by a first user and establish a first USSD session for interacting with the first user, herein the preset USSD instruction is set to instruct the sending of a short message; the authenticating module 24 is connected with the receiving module 22, and is arranged to receive, through the first USSD session, a destination number and short message content that are input by the first user, and authenticate the destination number; the forwarding module 26 is connected with the authenticating module 24, and is arranged to, when the authentication is successful, establish a second USSD session for interacting with a second user that corresponds to the destination number, and forward the short message content to the second user through the second USSD session.

In an exemplary embodiment, the authenticating module 24 may include: an authenticating unit 242, which is arranged to send the destination number to an OCS for authentication, herein the OCS is set to judge whether the destination number belongs to a user of the present network, and if yes, determine that the authentication of the destination number is successful, and/or, if not, send the short message content to the destination number through a short message.

In an exemplary embodiment, the device may also include: a response module 28, which is connected with the forwarding module 26, and is arranged to receive, through the second USSD session, short message content input by the second user, and forward the short message content to the first user through the first USSD session, and/or receive, through the first USSD session, short message content input by the first user, and forward the short message content to the second user through the second USSD session.

An illustration is given below in conjunction with an exemplary embodiment; the following exemplary embodiment combines the above embodiments and their exemplary implementations.

In the following exemplary embodiment, a method for processing USSD point-to-point message sending is provided. The method is a point-to-point sending method for USSD messages that is provided in a USSD (Unstructured Supplementary Service Data) application under the OCS (Online Charging System) framework of the intelligent network, aiming at the application of USSD value-added services by the operators. The method is similar to the way of sending a short message, but in some scenarios, the method is more advantageous in charge and real-time performance, and thus is beneficial to application and promotion of USSD value-added services. As for the method for processing USSD point-to-point message sending, in the case of international roaming, if a user uses the method for USSD point-to-point message sending, the international roaming fee of the user will be greatly saved, and the user is provided with more choices for sending messages, which facilitates application and promotion of USSD value-added services.

The method for the USSD point-to-point message sending provided by the exemplary embodiment provides the user with a method for using USSD to send messages. Especially in the case of international roaming, the method can reduce the fee of sending messages, so it has some usage advantages. Specifically,
1. When a user wants to send a message, the user firstly dials an access code of the service to access the method. The system judges whether the user is in a roaming state. The system may or may not limit that the user can only use the method in the roaming state, depending on the system development control. If the user can use the method, the system forwards a USSD response message to the user, so as to prompt the user to input the destination number to which the message is to be sent. After the user inputs the destination number, the system continues to prompt the user to input the content to be sent. The user inputs message content to be sent to the opposite side user, and then reply. The system starts to process the message sending.
2. When the user sends the point-to-point message by USSD, there are two types of destination numbers, one of which is a user of the present network, and the other is a user not belonging to the present network. The system firstly judges whether the user is of the present network or of another network. If the user is of the present network, a manner of directly forwarding the USSD message is used to send the USSD message to the destination user, which is the point-to-point USSD message sending mentioned in the method. If the user is of another network, the USSD message cannot be sent, and it can be converted to the manner of sending a short message. Certainly, when a USSD message is sent to a destination user of the present network, if the sending is failed, the message can also be sent to the destination user by a short message. A general rule is that if the USSD message can be sent successfully, the manner of the USSD point-to-point message sending is adopted; if the USSD message cannot be sent or the sending of the USSD message is failed, it can be converted to be sent by a short message. Since it is converted by the system to be sent by a short message, there is no roaming fee for sending the short message. Such a short message can be charged as an ordinary domestic short message.
3. If the user wanting to send a message is a user of the present network, the message can be sent by using USSD request signaling. Sending of the message requires initiating a second session, but the message cannot be sent to the number B in the original session. In the second session, the USSD message is sent to the user by using the USSD request. After the user B receives and views the USSD message, the user B can reply directly. After the user B replies content, the second session transmits the collected response of the user to the first session, and the collected response is transmitted to the user A as a response message of the user B. After reviewing the response, the user A can reply directly, then the system transmits the content of the response of the user A to the second session, and the second session forwards the content of the response to the user B, thus forming mutual reply and transmission of USSD messages between the user A and the user B.
4. If sending of the message to the user B is failed, or a response of the user B times out, or the user B is of another network, the method can send to the user B the content to be sent from the user A to the user B by means of a short message. The caller number of the short message is the user A, so that the user B and directly reply after receiving the short message. Since the short message is sent to the user B after the conversion by the system, the sending of the short message has no international roaming fee, and there is no international roaming fee for the user B to reply a short message to the user A. The user A receives the short message for free, but if the user A continues to send a message to the user B, the user A cannot respond with a short message. The user A needs to redial the access code in the method, and after receiving a prompt of the system, to re-input the content to be sent to the user B. That is, the user A can only use USSD to send a message to the user B. If the user A receives a response of short message from the user B, it reflects that the previous USSD direct point-to-point message sending may be failed, and afterwards the user A still need to redial the access code to input the content to be sent to the user B. If the response of the user B is received through USSD, a response can be sent directly through USSD, without the need of redialing the service access code to access a new session.
5. The service is also suitable for two other scenarios. One scenario is contrary to the above, that is, the user A is in domestic, and the user B is in an international roaming state. The user A initiates the service, and the user B directly replies after receiving the USSD message. The other scenario is that both the user A and user B are in the international roaming state. The effect of saving fees can be achieved in both scenarios.

The core content of the exemplary embodiment is to provide a method for USSC point-to-point message sending, which is very suitable for use by users in the international roaming condition. The method can effectively reduce the fees of users to send messages, provides the users with more choices for sending messages, and greatly facilitates application and promotion of USSD value-added services.

### Embodiment 1

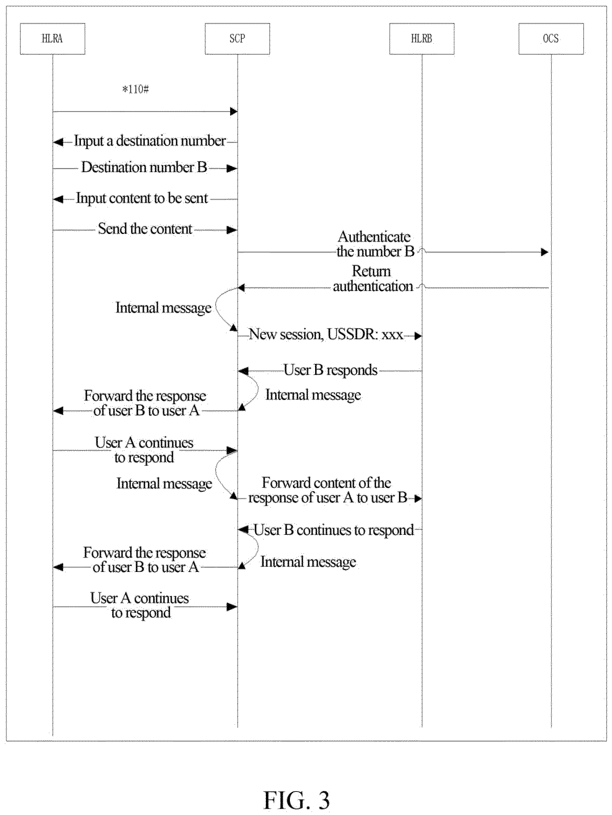

An illustration is given below by taking the implementation of USSD point-to-point message sending by an operator based on the OCS framework as an example. FIG. 3 is a signaling flowchart of normal point-to-point USSC message sending according to embodiment 1 of the present invention, in which SCP is a Service Control Point. As shown in FIG. 3, the specific implementation is described below.

The user A firstly dials a USSD access code (which is *110# in the embodiment) to access the flow of a service session (session A) of point-to-point USSD message sending. After receiving a request from the user, the system forwards a menu "please input the destination number to which the message is sent" to the user. The user inputs the destination number B to which the message is sent according to the prompt of the menu. After receiving the destination number B input by the user, the system continues to forward a menu "please input the message content to be sent" to the user A. The user A inputs the message to be sent. The system starts to process the message of the user A and prepares to send the message to the user B. In an exemplary embodiment, in those steps in which the user inputs the message to be sent, the user can directly input *110*B*content#, which has a higher efficiency, then the user can proceed to the step in which the system sends the message to the user B without the need of the above several steps of interaction.

The system firstly sends the number B to the OCS for authentication, so as to judge whether the number B is a user of the present network; if B is not a user of the present network, the system converts the message sent by the user A to the manner of a short message and sends the short message to the user B. The caller number of the short message is set to be the user A, so that the user B can reply after receiving the short message. Meanwhile, the system directly replies to the user A to prompt: "The user to whom you send the message to is not of the present network, and your message will be sent to the user B by means of a short message, thanks for using". Since it is the system that sends the converted short message to the user B, the user has no international roaming fee of short message.

If the number B is a user of the present network, the system sends an internal message to trigger a new session B, and the session is responsible for keeping USSD session interaction with the user B. The session B firstly forwards a request message to the user B to prompt: "A message from user A: xxx, you can directly reply to the message". Herein xxx is the message content sent by the user A. If the message content is too long, the system forwards the massages in pages, and the user can press the key * to view the content of a next page.

After receiving and viewing the message sent by the user A and forwarded by the system, the user B can reply directly. After receiving the reply of the user B, the system transmits, through the internal message, the message to the session A initiated by the user A. The session A initiates a USSD request message to the user A according to the collected response of the user B. As such, after viewing the reply of the user B, the user A can also reply directly. The message content replied is transmitted to the session B again, and then the session continues to send the content replied by the user A to the user B as a request message. The user B can view and reply directly. As such, mutual message transmission and reply between the user A and the user B can be implemented, and the messages they replied are all sent by the method of point-to-point message sending by using USSD.

In the process of interaction between the session A and the session B, there may be situations where the response of the user A or the user B times out and the sending of the message is failed. If there is a situation that the response of a user times out or the sending of the message is failed, the system will complete the sending of a next message by means of a short message. Such a short message forwarded by the system will not generate international roaming fee. Specifically,
1) The user A is waiting for a message result. After receiving a response, the user B directly hangs up, or a response times out. Then the session A sends a response end message to the user A to prompt that "Your message has been sent successfully, but the user B fails to respond timely or the response times out".
2) The user A is waiting for a message result, the session B fails to forward a request message to the user B. The user B may be in a state of power-off or no signal etc. Then the system directly sends the message of the user A to the user B by means of a short message. Meanwhile, the system responds to the user A with an end message: "The sending of your USSD message is failed, and the system will send your message to the user B by means of a short message, thanks".
3) If after sending a message, waiting of the user A times out, or the user A actively hangs up, and the user B replies a USSD message successfully, then the system sends the USSD message of the user B to the user A by means of a short message. Generally, it is the situation that the user A only wants to send one message to the user B, and the user B replies after viewing the message.
4) If after sending a message, waiting of the user A times out, or the user A actively hangs up, and the user B does not reply a USSD message but just views the message without reply, then the session A and session B both end automatically. Generally, it is the situation that the user A only wants to send one message to the user B, and the user B only views the message without reply.

The above is the specific implementation of the exemplary embodiment. The method for USSD point-to-point message sending provided in the exemplary embodiment is suitable for use in the situation where the user is in the international roaming state and the fees of voice calls and short messages are high. The method can effectively save the charge of sending messages by the user. The method is especially suitable for use in the situation where a sender
and a receiver continuously perform many times of information interaction between each other. The method greatly facilitates application and promotion of USSD value-added services.

In another embodiment, a software is also provided, which is arranged to perform the technical solutions described in the above embodiment and exemplary embodiment.

In another embodiment, a storage medium is also provided, which stores the above software. The storage medium includes, but is not limited to, a compact disc, a floppy disc, a hard disk, an erasable memory, etc.

Obviously, those skilled in the art should appreciate that the above modules and steps of the present invention can be implemented by a general-purpose computing device, and they can be centralized in a single computing device or distributed on a network composed of multiple computing devices. Optionally, they can be implemented by a program code which is capable of being executed by the computing device, so that they can be stored in a storage device and executed by the computing device, and in some situations, the presented or described steps can be executed in an order different from that described here; or they are made into integrated circuit modules, respectively; or multiple modules or steps of them are made into a single integrated circuit module to realize. In this way, the present invention is not limited to any particular combination of hardware and software.

What described above is just exemplary embodiment of the present invention and not intended to limit the present invention. For those skilled in the art, the present invention may have various modifications and changes within the scope of the appended claims.

### Industrial Applicability

As mentioned above, a method and device for sending a short message provided by the embodiments of the present invention are advantageous in solving the problem in the related art that point-to-point message sending cannot be implemented by using USSD, saving the international roaming fees of users, providing users with more choices for sending messages, facilitating application and promotion of USSD value-added services, and achieving highly real-time sending and strong privacy.

## Claims

1. A method for sending a short message, comprising:
receiving (S102) a preset Unstructured Supplementary Service Data, USSD, instruction input by a first user and establishing (S102) a first USSD session for interacting with the first user, wherein the preset USSD instruction is set to instruct the sending of a short message;
receiving (S104), through the first USSD session, a destination number and short message content that are input by the first user, and authenticating (SI04) the destination number; and
if the authentication is successful, establishing (S106) a second USSD session for interacting with a second user that corresponds to the destination number, and forwarding (SI06) the short message content to the second user through the second USSD session, **characterized by**:
wherein authenticating the destination number comprises:
sending the destination number to an Online Charging System, OCS for authentication, wherein the OCS is set to judge whether the destination number belongs to a user of the same network as the user who is sending the message;
if yes, determining that the authentication of the destination number is successful; and/or
if not, sending the short message content to the destination number through a short message.

2. The method according to claim 1, wherein after forwarding the short message content to the second user through the second USSD session, the method further comprises:
receiving, through the second USSD session, short message content input by the second user, and forwarding the short message content to the first user through the first USSD session; and/or
receiving, through the first USSD session, short message content input by the first user, and forwarding the short message content to the second user through the second USSD session.

3. The method according to claim 1, wherein after forwarding the short message content to the second user through the second USSD session, the method further comprises:
judging whether the second user hangs up the second USSD session or a response times out; and
if yes, sending a first end message to the first user through the first USSD session, wherein the first end message is set to notify that the sending of the short message content is successful, and a response of an opposite side user times out.

4. The method according to claim 1, wherein after forwarding the short message content to the second user through the second USSD session, the method further comprises:
judging whether forwarding the short message content to the second user through the second USSD session is failed; and
if yes, sending the short message content to the destination number through a short message, and sending a second end message to the first user through the first USSD session, wherein the second end message is set to notify that the sending of the short message content is failed, and the short message content has been sent through a short message.

5. The method according to claim 1, wherein after forwarding the short message content to the second user through the second USSD session, the method further comprises:
judging whether the first user hangs up the first USSD session or a response times out, and the second user responds to the first user; and
if yes, sending content of the response to the first user through a short message, and sending the second end message to the second user through the second USSD session, wherein the second end message is set to notify that the sending of the short message content is failed, and the short message content has been sent through a short message.

6. The method according to claim 1, wherein after forwarding the short message content to the second user through the second USSD session, the method further comprises:
judging whether the first user hangs up the first USSD session or a response times out, and the second user does not respond to the first user; and
if yes, hanging up the first USSD session and the second USSD session.

7. A device for sending a short message, comprising:
a receiving module (22), which is arranged to receive a preset Unstructured Supplementary Service Data, USSD, instruction input by a first user and establish a first USSD session for interacting with the first user, wherein the preset USSD instruction is set to instruct the sending of a short message;
an authenticating module (24), which is arranged to receive, through the first USSD session, a destination number and short message content that are input by the first user, and authenticate the destination number; and
a forwarding module (26), which is arranged to, when the authentication is successful, establish a second USSD session for interacting with a second user that corresponds to the destination number, and forward the short message content to the second user through the second USSD session, **characterized by**: wherein the authenticating module comprises:
an authenticating unit, which is arranged to send the destination number to an Online Charging System, OCS, for authentication, wherein the OCS is set to judge whether the destination number belongs to a user of the same network as the user who is sending the message; if yes, determine that the authentication of the destination number is successful; and/or, if not, send the short message content to the destination number through a short message.

8. The device according to claim 7, wherein the device further comprises:
a response module, which is arranged to receive, through the second USSD session, short message content input by the second user, and forward the short message content to the first user through the first USSD session, and/or, receive, through the first USSD session, short message content input by the first user, and forward the short message content to the second user through the second USSD session.

## Patentansprüche

1. Verfahren zum Senden einer Kurznachricht, umfassend:
Empfangen (S102) von voreingestellten unstrukturierten Zusatzdienstdaten (USSD), Anweisungseingabe von einem ersten Benutzer und Einrichten (S102) einer ersten USSD-Sitzung zur Interaktion mit dem ersten Benutzer, wobei die voreingestellte USSD-Anweisung als Anweisung zum Senden einer Kurznachricht eingestellt ist;
Empfangen (S104), über die erste USSD-Sitzung, einer Zielnummer und eines Kurznachrichtsinhalts, die vom ersten Benutzer eingegeben werden und Authentifizierung (S104) der Zielnummer; und
wenn die Authentifizierung erfolgreich ist, Einrichten (S106) einer zweiten USSD-Sitzung zur Interaktion mit einem zweiten Benutzer, der der Zielnummer entspricht, und Weiterleiten (S106) des Kurznachrichtsinhalts an den zweiten Benutzer über die zweite USSD-Sitzung, **gekennzeichnet, durch**:
wobei die Authentifizierung der Zielnummer Folgendes umfasst:
Senden der Zielnummer an ein Online-Charging-System (OCS) zur Authentifizierung, wobei das OCS eingestellt ist, um zu beurteilen, ob die Zielnummer einem Benutzer desselben Netzwerks gehört, wie das des Benutzers, der die Nachricht sendet;
wenn ja, Feststellen, dass die Authentifizierung der Zielnummer erfolgreich ist; und/oder
wenn nein, Senden des Kurznachrichtsinhalts über eine Kurznachricht an die Zielnummer.

2. Verfahren nach Anspruch 1, wobei das Verfahren nach Weiterleiten des Kurznachrichtsinhalts an den zweiten Benutzer über die zweite USSD-Sitzung weiter Folgendes umfasst:
Empfangen, über die zweite USSD-Sitzung, eines vom zweiten Benutzer eingegebenen Kurznachrichtsinhalts und Weiterleiten des Kurznachrichtsinhalts an den ersten Benutzer über die erste USSD-Sitzung; und/oder
Empfangen, über die erste USSD-Sitzung, des vom ersten Benutzer eingegebenen Kurznachrichtsinhalts und Weiterleiten des Kurznachrichtsinhalts an den zweiten Benutzer über die zweite USSD-Sitzung.

3. Verfahren nach Anspruch 1, wobei das Verfahren nach Weiterleiten des Kurznachrichtsinhalts an den zweiten Benutzer über die zweite USSD-Sitzung weiter Folgendes umfasst:
Beurteilen, ob der zweite Benutzer die zweite USSD-Sitzung abbricht oder eine Antwortzeit abgelaufen ist; und
wenn ja, Senden einer ersten Endmeldung an den ersten Benutzer über die erste USSD-Sitzung, wobei die erste Endmeldung eingestellt ist, um mitzuteilen, dass das Senden des Kurznachrichtsinhalts erfolgreich und eine Antwortzeit eines Benutzers auf der Gegenseite abgelaufen ist.

4. Verfahren nach Anspruch 1, wobei das Verfahren nach Weiterleiten des Kurznachrichtsinhalts an den zweiten Benutzer über die zweite USSD-Sitzung weiter Folgendes umfasst:
Beurteilen, ob das Weiterleiten des Kurznachrichtsinhalts an den zweiten Benutzer durch die zweite USSD-Sitzung fehlgeschlagen ist; und
wenn ja, Senden des Kurznachrichtsinhalts an die Zielnummer über eine Kurznachricht und Senden einer zweiten Endnachricht an den ersten Benutzer über die erste USSD-Sitzung, wobei die zweite Endnachricht eingestellt ist, um mitzuteilen, dass das Senden des Kurznachrichtsinhalts fehlgeschlagen ist und der Kurznachrichtsinhalt über eine Kurznachricht gesendet wurde.

5. Verfahren nach Anspruch 1, wobei das Verfahren nach Weiterleiten des Kurznachrichtsinhalts an den zweiten Benutzer über die zweite USSD-Sitzung weiter Folgendes umfasst:
Beurteilen, ob der erste Benutzer die erste USSD-Sitzung abbricht oder eine Antwortzeit abläuft und der zweite Benutzer dem ersten Benutzer antwortet; und
wenn ja, Senden des Inhalts der Antwort an den ersten Benutzer über eine Kurznachricht und Senden der zweiten Endnachricht an den zweiten Benutzer über die zweite USSD-Sitzung, wobei die zweite Endnachricht eingestellt ist, um mitzuteilen, dass das Senden des Kurznachrichtsinhalts fehlgeschlagen ist und der Kurznachrichtsinhalt über eine Kurznachricht gesendet wurde.

6. Verfahren nach Anspruch 1, wobei das Verfahren nach Weiterleiten des Kurznachrichtsinhalts an den zweiten Benutzer über die zweite USSD-Sitzung weiter Folgendes umfasst:
Beurteilen, ob der erste Benutzer die erste USSD-Sitzung abbricht oder eine Antwortzeit abläuft und ob der zweite Benutzer dem ersten Benutzer nicht antwortet; und
wenn ja, Abbrechen der ersten USSD-Sitzung und der zweiten USSD-Sitzung.

7. Vorrichtung zum Senden einer Kurznachricht, umfassend:
ein Empfangsmodul (22), das angeordnet ist, um voreingestellte unstrukturierte Zusatzdienstdaten (USSD) zu empfangen,
Anweisungseingabe von einem ersten Benutzer und Einrichten einer ersten USSD-Sitzung zur Interaktion mit dem ersten Benutzer, wobei die voreingestellte USSD-Anweisung als Anweisung für das Senden einer Kurznachricht eingestellt ist;
ein Authentifizierungsmodul (24), das angeordnet ist, um durch die erste USSD-Sitzung eine Zielnummer und einen Kurznachrichtsinhalt zu empfangen, die von dem ersten Benutzer eingegeben werden und die Zielnummer zu authentifizieren; und
ein Weiterleitungsmodul (26), das, wenn die Authentifizierung erfolgreich ist, angeordnet ist, um eine zweite USSD-Sitzung zur Interaktion mit einem zweiten Benutzer einzurichten, der der Zielnummer entspricht, und den Kurznachrichtsinhalt an den zweiten Benutzer über die zweite USSD-Sitzung weiterzuleiten,
**gekennzeichnet, durch**:
wobei das Authentifizierungsmodul Folgendes umfasst:
eine Authentifizierungseinheit, die angeordnet ist, um die Zielnummer einem Online-Charging-System (OCS) zur Authentifizierung zu senden,
wobei das OCS eingestellt ist, um zu beurteilen, ob die Zielnummer einem Benutzer desselben Netzwerks gehört, wie das des Benutzers, der die Nachricht sendet; wenn ja, Feststellen, dass die Authentifizierung der Zielnummer erfolgreich ist; und/oder, wenn nein, Senden des Kurznachrichtsinhalts über eine Kurznachricht an die Zielnummer.

8. Vorrichtung nach Anspruch 7, wobei die Vorrichtung weiter Folgendes umfasst:
ein Antwortmodul, das angeordnet ist, um über die zweite USSD-Sitzung den vom zweiten Benutzer eingegebenen Kurznachrichtsinhalt zu empfangen und den Kurznachrichtsinhalt an den ersten Benutzer über die erste USSD-Sitzung weiterzuleiten, und/oder über die erste USSD-Sitzung den vom ersten Benutzer eingegebenen Kurznachrichtsinhalt zu empfangen und den Kurznachrichtsinhalt über die zweite USSD-Sitzung an den zweiten Benutzer weiterzuleiten.

## Revendications

1. Un procédé d'envoi d'un message court, comprenant :
la réception (S102) d'une instruction prédéfinie de Donnée de service supplémentaire non structuré, USSD, entrée par un premier utilisateur et l'établissement (S102) d'une première session USSD pour interagir avec le premier utilisateur, où l'instruction USSD prédéfinie est configurée pour instruire l'envoi d'un message court ;
la réception (S104), à travers la première session USSD, d'un numéro de destination et d'un contenu de message court qui sont entrés par le premier utilisateur, et l'authentification (S104) du numéro de destination ; et
si l'authentification a réussi, l'établissement (S106) d'une deuxième session USSD pour interagir avec un deuxième utilisateur qui correspond au numéro de destination, et la transmission (S106) du contenu de message court au deuxième utilisateur via la deuxième session USSD, **caractérisé par** :
où l'authentification du numéro de destination comprend :
l'envoi du numéro de destination à un système de facturation en ligne, OCS, pour authentification, où l'OCS est configuré pour déterminer si le numéro de destination appartient à un utilisateur du même réseau que l'utilisateur qui envoie le message ;
si oui, la détermination que l'authentification du numéro de destination a réussi ; et/ou
si non, l'envoi du contenu de message court au numéro de destination via un message court.

2. Procédé selon la revendication 1, où après la transmission du contenu de message court au deuxième utilisateur via la deuxième session USSD, le procédé comprend en outre :
la réception, à travers la deuxième session USSD, d'un contenu de message court entré par le deuxième utilisateur, et la transmission du contenu de message court au premier utilisateur via la première session USSD ; et/ou
la réception, à travers la première session USSD, d'un contenu de message court entré par le premier utilisateur, et la transmission du contenu de message court au deuxième utilisateur via la deuxième session USSD.

3. Procédé selon la revendication 1, où après la transmission du contenu de message court au deuxième utilisateur via la deuxième session USSD, le procédé comprend en outre :
la détermination si le deuxième utilisateur raccroche la deuxième session USSD ou si une réponse expire ; et
si oui, l'envoi d'un premier message de fin au premier utilisateur via la première session USSD, où le premier message de fin est configuré pour notifier que l'envoi du contenu de message court a réussi, et qu'une réponse d'un utilisateur opposé a expiré.

4. Procédé selon la revendication 1, où après la transmission du contenu de message court au deuxième utilisateur via la deuxième session USSD, le procédé comprend en outre :
la détermination si la transmission du contenu de message court au deuxième utilisateur via la deuxième session USSD a échoué ; et
si oui, l'envoi du contenu de message court au numéro de destination via un message court, et l'envoi d'un deuxième message de fin au premier utilisateur via la première session USSD, où le deuxième message de fin est configuré pour notifier que l'envoi du contenu de message court a échoué et que le contenu de message court a été envoyé via un message court.

5. Procédé selon la revendication 1, où après la transmission du contenu de message court au deuxième utilisateur via la deuxième session USSD, le procédé comprend en outre :
la détermination si le premier utilisateur raccroche la première session USSD ou si une réponse expire, et si le deuxième utilisateur répond au premier utilisateur ; et
si oui, l'envoi du contenu de la réponse au premier utilisateur via un message court, et l'envoi du deuxième message de fin au deuxième utilisateur via la deuxième session USSD, où le deuxième message de fin est configuré pour notifier que l'envoi du contenu de message court a échoué et le contenu de message court a été envoyé via un message court.

6. Procédé selon la revendication 1, où après la transmission du contenu de message court au deuxième utilisateur via la deuxième session USSD, le procédé comprend en outre :
la détermination si le premier utilisateur raccroche la première session USSD ou si une réponse expire, et le deuxième utilisateur ne répond pas au premier utilisateur ; et
si oui, le raccrochage de la première session USSD et la deuxième session USSD.

7. Dispositif d'envoi de message court, comprenant :
un module de réception (22), conçu pour recevoir une instruction prédéfinie de Donnée de service supplémentaire non structuré, USSD,
entrée par un premier utilisateur et établir une première session USSD pour interagir avec le premier utilisateur, où l'instruction USSD prédéfinie est configurée pour instruire l'envoi d'un message court ;
un module d'authentification (24), conçu pour recevoir, à travers la première session USSD, un numéro de destination et un contenu de message court qui sont entrés par le premier utilisateur, et authentifier le numéro de destination ; et
un module de transmission (26), conçu pour, lorsque l'authentification a réussi, établir une deuxième session USSD pour interagir avec un deuxième utilisateur qui correspond au numéro de destination, et
transmettre le contenu de message court au deuxième utilisateur via la deuxième session USSD,
**caractérisé par** :
où le module d'authentification comprend :
une unité d'authentification, conçue pour envoyer le numéro de destination à un système de facturation en ligne, OCS, pour authentification, où l'OCS est configuré pour déterminer si le numéro de destination appartient à un utilisateur du même réseau que l'utilisateur qui envoie le message ; si oui, déterminer que l'authentification du numéro de destination a réussi ; et/ou, si non, envoyer le contenu de message court au numéro de destination via un message court.

8. Dispositif selon la revendication 7, où le dispositif comprend en outre :
un module de réponse, conçu pour recevoir, à travers la deuxième session USSD, un contenu de message court entré par le deuxième utilisateur, et transmettre le contenu de message court au premier utilisateur via la première session USSD ; et/ou recevoir, à travers la première session USSD, le contenu de message court entré par le premier utilisateur, et transmettre le contenu de message court au deuxième utilisateur via la deuxième session USSD.
